# EUROPEAN PATENT SPECIFICATION

(11) **EP 3 945 246 B1**
(45) Date of publication and mention of the grant of the patent: **07.02.2024**
(21) Application number: 20187960.8
(22) Date of filing: 27.07.2020
(51) Int. Cl.: F23R 3/46, F23R 3/60, F01D 9/02, F01D 11/00, F02C 7/28

(54) **GAS TURBINE FOR POWER PLANTS HAVING A HONEYCOMB SEAL DEVICE**
GASTURBINE FÜR KRAFTWERKE MIT WABENKÖRPERDICHTUNG
TURBINE À GAZ POUR CENTRALES ÉLECTRIQUES DOTÉ D'UN DISPOSITIF D'ÉTANCHÉITÉ EN NID D'ABEILLES

(43) Date of publication of application: 02.02.2022
(73) Proprietor: Ansaldo Energia Switzerland AG, 5400 Baden (CH)
(72) Inventor: BERGER, Carl, 5400 BADEN (CH); BRICAUD, Cyrille Jerome, 79618 RHEINFELDEN (DE); STRUEKEN, Stephan, 8046 ZURICH (CH)
(74) Representative: Studio Torta S.p.A.

(56) References cited:
- EP-A1- 3 421 726
- US-A1- 2013 175 325
- US-A1- 2016 076 454
- US-A1- 2018 100 439

## Description

### Field of the Invention

The present invention relates to the technical field of the gas turbine assemblies for power plants. As known, in a gas turbine assembly (in the following only gas turbine) an incoming air flow is compressed in a compressor and then mixed with fuel and ignited in a combustor to produce a hot gas flow to be expanded in a turbine for generating a rotating work on a rotor in turn connected to a generator. Due to the very high temperature of the working hot gas, some components of a gas turbine have to be cooled and therefore beside of the main hot gas flow also a cooling flow (usually cooling air as part of the compressed air) is circulating inside the gas turbine. In this technical field, the present invention, in detail, refers to the technical problem of how to seal the combustor to turbine interface for separating the cooling air flow from the hot gas flow.

### Description of prior art

As known, a gas turbine for power plants comprises a compressor assembly, a combustor assembly and a turbine assembly. The compressor assembly is configured for compressing incoming air supplied at a compressor inlet. The compressed air leaving the compressor assembly flows into a volume (called "plenum") and from there into the combustor assembly. This combustor assembly comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and by passing in the turbine assembly performs a rotating work on the rotor connected to a generator. As known, the turbine assembly comprises a plurality of stages, or rows, of rotating blades that are interposed by a plurality of stages, or rows, of stator vanes. The rotating blades are supported by the rotor whereas the stator vanes are supported by a casing (called "vane carrier") that is concentric and surrounding the turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine comprises a first and a second combustion stages wherein each combustion stage is provided with a plurality of burners. Today at least two different kinds of sequential gas turbines are known. According to a first embodiment, the first and the second combustor are annular shaped and are physically separated by a stage of turbine blades, called high pressure turbine. Downstream the second combustor a second turbine unit is present (called low pressure turbine) . This kind of gas turbine is produced by the Applicant and is available on the market as "GT26". According to a second embodiment of a sequential gas turbine, the gas turbine is not provided with the high-pressure turbine and the combustor assembly is realized in form of a plurality of can-combustors arranged as a ring around the gas turbine axis. Each can-combustor comprises a first combustor and a second combustor arranged directly one downstream the other inside a common can shaped casing. This second kind of a sequential gas turbine is produced by the Applicant and is available on the market as "GT36". The present invention (i.e. an improved honeycomb seal device as will be described in the following) can be applied in all foregoing described gas turbines. Preferably, the present invention can be applied in GT36-type gas turbines or, in general, in a gas turbine having a combustor unit realized in form of a plurality of can combustors having a single or a double combustion stage.

In almost all kind of gas turbine assemblies, seals are used for sealing the interface between stationary and moving components and/or for separating the hot gas flow from the cooling air flow. In particular, the sealing of the interface between each can combustor outlet (in form of a picture frame) and the first vane row of the turbine is today a challenge. Indeed, in this interface the vane usually has to be cooled while minimizing cooling air leakage into the hot gas flow and moreover the vane can move along the axial radial direction for compensating different thermal expansions.

According to a solution available on the market, the sealing arrangement of the combustor outlet to turbine interface comprises a plurality of honeycomb seals. In this example, each first vane comprises an inner platform. The word "inner" means near to the turbine axis in contrast with the outer end of the vane connected to the outer supporting casing surrounding the turbine. Each platform comprises a tooth acting against a honeycomb seal housed in a groove obtained in the inner part of the combustor end, for a can combustor in form of a picture frame.

In this particular kind of sealing arrangement (with honeycomb seal), today there is the need to improve the wear life of the sealing and the sealing performance.

EP 3 421 726 A1 relates to a gas turbine for power plants comprising a plurality of can combustors. In particular, EP 3 421 726 A1 relates to the downstream portion of each can combustor, wherein such downstream portion is called in gas turbine technical field as "picture frame" and is configured for connecting the can combustor to the turbine. According to EP 3 421 726 A1, the picture frame comprises a seat housing an insert configure to improve the cooling of the picture frame.

US 2013/0175325 A1 relates to a method of making a cellular (e.g. honeycomb) seal as may be used, for example, in a turbine. According to US 2013/0175325 A1, the surfaces of the cellular seal may be further protected by a thermal barrier coating (TBC).

### Disclosure of the invention

Accordingly, a primary object of the present invention is to provide a gas turbine having a honeycomb seal device suitable for sealing in an improved manner the combustor to turbine interface. In particular, the primary object of the present invention is to provide a gas turbine having a honeycomb seal device suitable for improving the wear life of the sealing, for improving the sealing performance, for compensating the groove height tolerances independently on the thermal deformations. A gas turbine suitable for being provided with the honeycomb seal device of the present invention is a gas turbine assembly for power plant comprising:
- at least a combustor;
- a turbine arranged downstream the combustor;
wherein:
- the combustor comprises a downstream end facing the turbine and provided with an inner groove and the turbine comprises a plurality of first stator vanes;
- each first stator vane comprises an inner platform provided with a tooth projecting in part inside the inner groove.

At least a seal is provided housed in the inner grooves of the combustor downstream end and are configured for cooperating with the vane teeth for sealing the combustor to turbine interface.

Preferably the gas turbine comprises a plurality of can combustors wherein the downstream end of each can combustors is in form of a picture frame with the mentioned inner groove.

Please notice that, as common in the field of gas turbines, the words "upstream" and "downstream" refer to the hot gas flow direction. The words "inwards/inner" and "outwards/outer" refer to the radial position related to the axis of the gas turbine. Also, the words "axially", "radially", "circumferentially" or "annular" refer to the axis of the gas turbine.

In the gas turbine structure as foregoing listed (wherein some components even if present, for instance the compressor, have not been cited), at least a seal is a new or improved honeycomb seal device. According to the main feature of the invention, the honeycomb seal device is an assembly comprising two bodies: a honeycomb body made of a plurality or radial cells (as a common honeycomb seal) and a shield body covering at least the part of the honeycomb body cooperating with the vane tooth and exposed to the hot gas. The shield body can be made of a metallic material or ceramic or any suitable heat resistant material (resistant to the high hot gas temperature) configured for mechanically protecting the honeycomb body.

In this way, the wear life and the sealing performance are improved while maintaining the damping characteristics.

Each groove and the honeycomb body have an annular extent, and the honeycomb body comprises:
- a front radial face directed towards the opening of the groove and the turbine;
- an opposite back radial face facing the bottom of the groove;
- an inner axial face facing the inner surface of the groove;
- an outer axial face facing the outer surface of the groove.

The shield body has a C-shaped cross section and covers the front face and part (i.e. the downstream part) of the inner face and the outer face of the honeycomb body. The coupling between the honeycomb body and the shield body may be a tight fit coupling.

The honeycomb body has a T-cross section so that, along the axial direction, the upstream portion has a radial extent higher than the downstream portion. The T-shape are performed by providing the inner face and the outer face with a step having a radial extent. The shield body covers the entire portions of the inner face and the outer face corresponding to the downstream portion of the honeycomb body or only part of these faces with a gap between the steps and the ends of the shield body.

Preferably, the portions of the shield body covering the inner face and the outer face of the honeycomb body are provided with a plurality of axial grooves.

Finally, the combustor may be a can combustor configured for performing a single combustion stage or two sequential combustion stages.

It being understood that both the foregoing general description and the following detailed description are exemplary and are intended to provide further explanation of the invention as claimed. Other advantages and features of the invention will be apparent from the following description, drawings and claims.

The features of the invention believed to be novel are set forth with particularity in the appended claims.

In general, the invention increases the protection of the honeycomb body and it allows to archive the following purposes:
- improving wear life;
- improving sealing performance;
- compensating groove height tolerances;
- unaffecting by thermal deformations of the engine;
- damping characteristics;
- pressure activation;
- simplicity of the design;
- cheap and simple solution.

### Brief description of drawings

Further benefits and advantages of the present invention will be evident after a careful reading of the detailed description with appropriate reference to the annexed drawings.

The invention itself, however, may be better understood by referring to the following detailed description of the invention, which describes an exemplary embodiment of the invention, taken in conjunction with the annexed drawings, in which:
- figure 1 is a schematic view of an example of a gas turbine suitable to be provided with the honeycomb seal device according to the present invention;
- figure 2 is a schematic view of the portion labelled as II in figure 1;
- figure 3 is a schematic view of the portion labelled as III in figure 2;
- figure 4 is a schematic view of the combustor to turbine interface wherein the end of the combustor is realized according to figure 3;
- figure 5 is a schematic view of the portion labelled as V in figure 4 disclosing a first example of a honeycomb seal device according to the present invention;
- figure 6 is a schematic view of the honeycomb seal device of figure 5 isolated from the combustor end;
- figure 7 is a schematic view of an example of a honeycomb seal device which is not part of the present invention;
- figure 8 is a schematic view of a second example of a honeycomb seal device according to the present invention;
- figures 9a-9e are schematic views of different examples of a component forming the honeycomb seal device according to the present invention.

### Detailed description of preferred embodiments of the invention

In cooperation with the attached drawings, the technical contents and detailed description of the present invention are described thereinafter according to the preferred embodiments, being not used to limit its executing scope. Any equivalent variation and modification made according to appended claims is all covered by the claims claimed by the present invention.

Reference will now be made to the drawing figures to describe the present invention in detail.

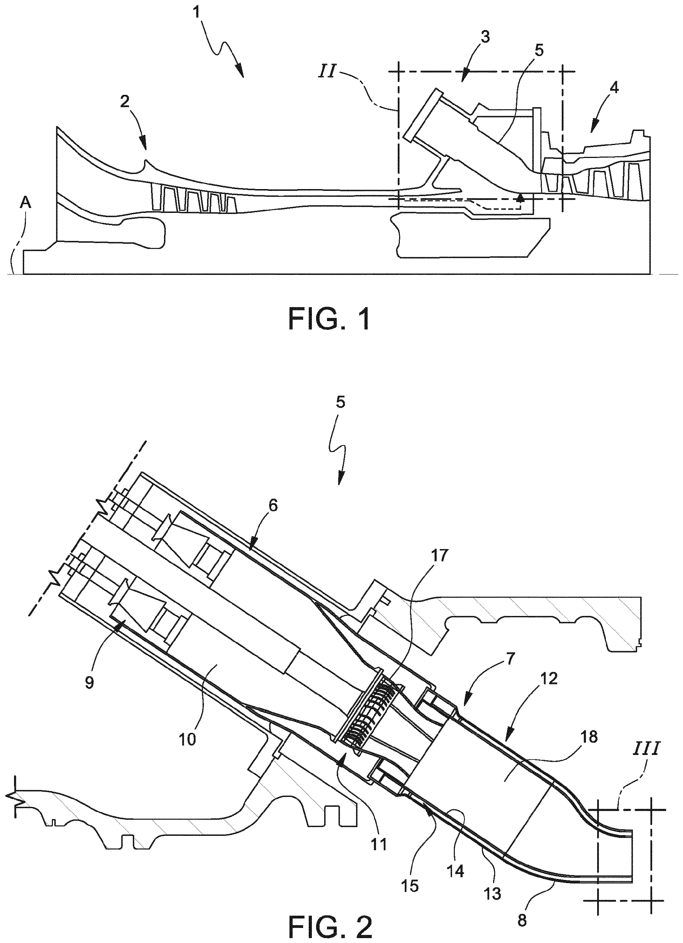

Reference is made to figure 1 which is a side elevation view, cut along an axial, longitudinal plane, of a gas turbine assembly that can be provided with the honeycomb seal device according to the present invention. In particular, figure 1 discloses a simplified view of a gas turbine assembly, designated as whole with reference 1. The gas turbine assembly 1 comprises a compressor 2, a combustor assembly 3 and a turbine 4. The compressor 2 and the turbine 4 extend along a main axis A. The combustor assembly 3 disclosed in the example of figure 1 is a can combustor 5 that may be a sequential combustor or a single-stage combustor. As known, the gas turbine 1 comprises a plurality of can combustor 5 arranged as a ring around the axis A. The compressor 2 of the gas turbine engine 1 provides a compressed airflow, which is added with fuel and burned in each can combustors 5. Part of the airflow delivered by the compressor 2 is spilled form the main flow and supplied to the combustor assembly 3 and to the turbine section 4 for the purpose of cooling. The can combustor is only an example of a combustor that can be provided with the present invention.

Reference is now made to figure 2 that is an enlarged view of the portion labelled with the reference II in figure 1. In particular, figure 2 discloses an example of a can combustor 5 that can be provided with the invention. The can combustor 5 disclosed in figure 2 involves two combustion stages. In fact the can combustor 5 disclosed in figure 2 comprises a first-stage combustor 6, a second-stage combustor 7 and a transition duct 8, sequentially arranged and defining a hot gas path. More specifically, the first-stage combustor 6 comprises a first-stage burner unit 9 and a first-stage combustion chamber 10. The second-stage combustor 7 is arranged downstream of the first-stage combustor 6 and comprises a second-stage burner unit 17 and a second-stage combustion chamber 18. The second-stage combustor 7 is furthermore coupled to the turbine 4, here not shown, through the transition duct 8. The second-stage combustion chamber 12 extends along an axial direction downstream of the first-stage combustor 6. In this embodiment, the second-stage combustion chamber 12 comprises an outer liner 13 and an inner liner 14 wherein the outer liner 13 surrounds the inner liner 14 at a distance therefrom, so that a convective cooling channel 15 is defined between the outer liner 13 and the inner liner 14.

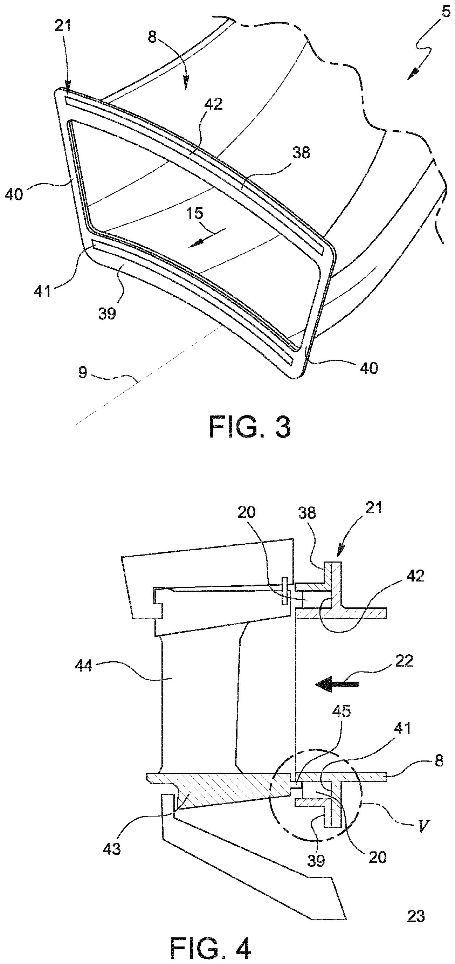

Reference is now made to Fig. 3 that is a schematic view of the portion labelled as III in figure 2, i.e. the end of the transition duct 8. As foregoing described about the can combustor 5, a transition piece 8 is provided for guiding the hot gas towards the turbine 4, in particular towards the first row of vanes of the turbine. Such transition duct 8 has to be coupled in a sealed manner to the turbine 4 and therefore comprises a particular downstream portion provided with a square flange 21, called picture frame. Fig. 3 is a schematic view of such picture frame 21 arranged downstream the combustor and comprised an outer annular wall 38, an inner annular wall 39 and two lateral radial walls 40. As disclosed, and as known, the outer annular wall 38 and the inner annular wall 39 are configured to be coupled in a sealed manner with the first vane row of the turbine. For this purpose the outer annular wall 38 and the inner annular wall 39 comprises an inner annular groove 41 and an outer annular groove 42 configured for housing a seal, according to the present invention for housing a new and inventive honeycomb seal device. The two lateral radial walls 40 are configured to be coupled in a sealed manner with lateral radial walls 40 of adjacent picture frame 21.

Reference is made to Figure 4 which is a schematic view of the combustor to turbine interface wherein the combustor end corresponds to the picture frame 21 of figure 3. As disclosed, the inner annular groove 41 cooperates with the inner platform 43 of the vane 44, in particular with a tooth 45 projecting from the inner platform 43 at least in part inside the inner annular groove 41. Inside the inner annular groove 41 a honeycomb seal device 20 is provided wherein this honeycomb seal device 20 cooperates with the tooth 45 for sealing, i.e. dividing, the hot gas flow, represented with arrow 22, from the cooling air flow, represented with arrow 23. How a honeycomb seal cooperates with the tooth 45 for providing a sealing effect and for controlling the flows is known by the skill person. The outer annular groove 42 may also be provided with a honeycomb seal device 20 according to the invention or with a common honeycomb seal. In figure 4 the outer annular groove 42 cooperates with an outer casing called vane carrier.

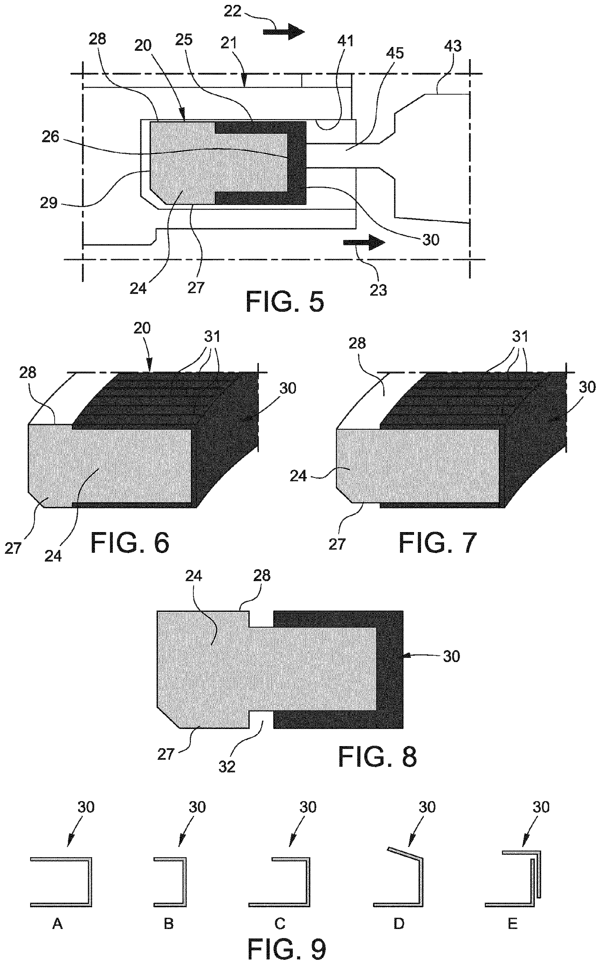

Figure 5 discloses an enlarged view of the portion labelled as V in figure 4. In particular, figure 5 discloses a first example of a honeycomb seal device 20 according to the invention. As shown, the honeycomb seal device 20 is housed in the inner annular groove 42 and it is configured for sealing the combustor to vane interface, i.e. for allowing only a controlled cooling airflow passage. The honeycomb seal device 20 is almost "tight fit" in the groove 41. However, an axial accommodation is allowed so that the contact between the tooth 45 and the honeycomb seal device 20 is always guarantee. In particular, the honeycomb seal device 20 is "pressure activated", i.e. in case of axial enlargement of the distance between picture frame and the vane the honeycomb seal device 20 can follow the vane pushed by the cooling air. During axial closure, the vane tooth 45 pushes the honeycomb seal device 20 into the picture frame groove 41. As disclosed in figure 5, and according to the main feature of the invention, the honeycomb seal device 20 is an assembly comprising two elements or bodies assembled each other. The first element is a honeycomb body 24 (like a common honeycomb seal used in the prior art) having a plurality of vertical (aligned to the radial direction) cells. The honeycomb body 24 has an annular extension corresponding the annular extension of the groove 41 and comprises a front or downstream radial face 26 directed to the vane, an inner axial face 27 facing the inner portion of the groove 41, an outer axial face 28 facing with the outer portion of the groove 41 and a back radial face 29 facing the bottom of the groove 41. The second element of the honeycomb seal device 20 is a shield body 30 (made for instance of a high-temperature alloy as Hastalloy-X, Haynes 214, Haynes 282, Haynes 188) configured for covering part of the honeycomb body 24. In particular, the shield body 30 of figure 5 has a C-shaped cross-section and it covers the front face 26 and part (i.e. a downstream portion) of the outer face 28 and the inner face 27 of the honeycomb body 24. Therefore, according to the invention the vane tooth 45 acts against the shield body 30 and not against the honeycomb body 24. Moreover, only the shield body 30 is in contact with the hot gas flow. In the example of figure 5, the honeycomb body 24 discloses a T or hammer-shape cross section so that the upstream portion of the honeycomb body 24 has a radial extent higher that the downstream portion and the outer face 28 and the inner face 27 disclose a radial step. In this example the step obtained in the outer face 28 and the step obtained in the inner face 27 disclose the same radial extent and have been realized in the same axial position. However, the radial extent and the axial position of the two steps may be different. In this example, the inner and outer portions of the shield body 30, i.e. the portion covering part of the outer face 28 and the inner face 27 of the honeycomb body 24, disclose an axial extent so that no gaps are present between the steps and the shield body 30. Moreover, in this example the radial thickness of the inner and outer portions of the shield body 30 is equal to the radial extent of the step so that the honeycomb seal device 20 discloses a straight or flat inner and outer surfaces.

Figure 6 discloses part of the annular extent of the honeycomb seal device 20 of figure 5. According to this example, the inner and the outer portions of the shield body 30 comprise a plurality of axial cuts or grooves 31 for increasing the lateral/annular flexibility and for controlling the cooling airflow passing by the honeycomb seal device 20 and the groove 41. In this example, the extent of the axial cuts or grooves 31 corresponds to the extent of the inner and the outer portions of the shield body 30. However, the cuts or grooves 31 may also continue on the front portion of the shield body 30 with a radial extent.

Figure 7 refers to an example of a honeycomb seal device 20 which is not part of the present invention. In this example the shield body 30 corresponds to the shield body 30 of figure 6 whereas the inner face 27 and the outer face 28 of the honeycomb body 24 are straight or flat in absence of any steps. The radial extent of the honeycomb body 24 is constant.

Figure 8 refers to a different embodiment of a honeycomb seal device 20 according to the present invention. In this example the honeycomb body 24 corresponds to the honeycomb body 24 of figure 5 whereas gaps 32 are present between the inner and the outer portion of the shield body 30 and the steps obtained in the inner and the outer faces of the honeycomb body 24.

Finally, the figures from 9a to 9e disclose different embodiments of the shield body 30. In particular, in figure 9c the axial extent of the inner portion is longer than the outer portion, in figure 9d the outer portion is inclined or angled with respect to the axial direction and in figure 9e the shield body 30 is realized in form of two L element superimposed at the front portion. In case of angled shield body, in this embodiment the shield body is preferably radially elastically slightly deformable in order to compensate assembly tolerances of radial groove height and change of the groove height during operation due to non-uniform thermal deformation of the combustor end.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A gas turbine for power plant; the gas turbine (1) comprising:
- at least a combustor, preferably a plurality of can combustors (5);
- a turbine (4) downstream the combustor (5);
wherein
- the combustor comprises a downstream end (21), preferably a picture frame for each can combustor, facing the turbine (4) and provided with an inner groove (41);
- the turbine (4) comprises a plurality of a first stator vanes (44); each first stator vane (44) comprising an inner platform (43) provided with a tooth (45) projecting in part inside the inner groove (41);
wherein
a plurality of seals are provided housed in the inner grooves (41) of the combustor downstream end (21) and are configured for cooperating with the vane teeth (45) for sealing each can combustor to turbine interface;
wherein
at least a seal is a honeycomb seal device (20), the honeycomb seal device (20) being **characterized in that**
the honeycomb seal device (20) is an assembly comprising a honeycomb body (24) made of a plurality or radial cells and a shield body (30) covering at least the part of the honeycomb body (24) cooperating with the vane tooth (45);
wherein each groove (41) and the honeycomb body (24) have a annular extent; the honeycomb body (24) comprises a front face (26) directed towards the turbine (4), an opposite back face (29) facing the bottom of the groove (41), an inner face (27) facing the inner surface of the groove (41) and an outer face (28) facing the outer surface of the groove (41); the shield body (30) covering the front face (26) and part of the inner face (27) and the outer face (28) of the honeycomb body (24);
wherein the honeycomb body (24) discloses a T-cross section wherein an upstream portion has a radial extent higher than a downstream portion; the shield body (30) covering either the entire inner face (27) and the outer face (28) corresponding to the downstream portion of the honeycomb body (24), or only a part of the inner face (27) and the outer face (28) corresponding to the downstream portion of the honeycomb body (24).

2. Gas turbine as claimed in claim 1, wherein the portions of the shield body (30) covering the inner face (27) and the outer face (28) of the honeycomb body (24) are provided with a plurality of axial grooves (31).

3. Gas turbine as claimed in any one of claims 1 or 2, wherein along the axial direction the shield body (30) covers more than a half of the inner face (27) and the outer face (28) of the honeycomb body (24).

4. Gas turbine as in any one of claims 1 or 2, wherein along the axial direction the shield body (30) covers less than a half of the inner face (27) and the outer face (28) of the honeycomb body (24).

5. Gas turbine as in any one of claims 1 or 2, wherein shield body (30) covers the inner face (27) and the outer face (28) of honeycomb body (24) for different axial extents.

6. Gas turbine as claimed in any one claims 1 or 2, wherein the portion of the shield body (30) covering the inner face (27) and/or the outer face (28) of honeycomb body (24) is angled with respect to the axial direction, the shield body being preferably radially elastically slightly deformable in order to compensate assembly tolerances of radial groove height and change of the groove height during operation due to non-uniform thermal deformation of the combustor end.

7. Gas turbine as claimed in any one of the foregoing claims, wherein each picture frame (21) comprises also an outer groove (42), at least honeycomb seal device (20) being also provided in one of said outer grooves (42).

8. Gas turbine as claimed in any one of the foregoing claims, wherein a plurality of can combustors is provided, each can combustor (5) is configured for performing a single combustion stage.

9. Gas turbine as claimed in any one of the foregoing claims from 1 to 7, wherein a plurality of can combustors is provided, each can combustor (5) is configured for performing two sequential combustion stages.

10. Gas turbine as claimed in any one of the foregoing claims, wherein each the shield body (30) is made of metallic material, preferably alloy, or ceramic or any suitable heat resistant material configured for mechanically protecting the honeycomb body.

11. Gas turbine as claimed in any one of the foregoing claims, wherein the coupling between the shield body (30) and the honeycomb body (24) is tight fit coupling.

## Patentansprüche

1. Gasturbine für ein Kraftwerk; wobei die Gasturbine (1) umfasst:
- wenigstens einen Brenner, vorzugsweise mehrere Dosenbrenner (5);
- eine Turbine (4) stromabwärts des Brenners (5); wobei
- der Brenner ein stromabwärts gelegenes Ende (21) umfasst, vorzugsweise einen Rahmen für jeden Dosenbrenner, das der Turbine (4) zugewandt und mit einer inneren Nut (41) versehen ist;
- die Turbine (4) mehrere erste Statorschaufeln (44) umfasst; wobei jede erste Statorschaufel (44) eine innere Plattform (43) umfasst, die mit einem Zahn (45) versehen ist, der teilweise in die innere Nut (41) hineinragt;
wobei mehrere Dichtungen vorgesehen sind, die in den inneren Nuten (41) des stromabwärts gelegenen Endes (21) des Brenners untergebracht sind und dazu konfiguriert sind, mit den Schaufelzähnen (45) zusammenzuwirken, um jeweils die Übergangsstelle zwischen Dosenbrenner und Turbine abzudichten;
wobei wenigstens eine Dichtung eine wabenförmige Dichtungsvorrichtung (20) ist, wobei die wabenförmige Dichtungsvorrichtung (20) **dadurch gekennzeichnet ist, dass** die wabenförmige Dichtungsvorrichtung (20) eine Anordnung ist, die einen aus mehreren radialen Zellen gefertigten wabenförmigen Körper (24) und einen Abschirmungskörper (30) umfasst, der wenigstens den Teil des wabenförmigen Körpers (24) bedeckt, der mit dem Schaufelzahn (45) zusammenwirkt;
wobei jede Nut (41) und der wabenförmige Körper (24) eine ringförmige Ausdehnung aufweisen; wobei der wabenförmige Körper (24) eine zu der Turbine (4) gerichtete Vorderfläche (26), eine gegenüberliegende, dem Boden der Nut (41) zugewandte Rückfläche (29), eine der inneren Oberfläche der Nut (41) zugewandte Innenfläche (27) und eine der äußeren Oberfläche der Nut (41) zugewandte Außenfläche (28) aufweist; wobei der Abschirmungskörper (30) die Vorderfläche (26) und einen Teil der Innenfläche (27) und der Außenfläche (28) des wabenförmigen Körpers (24) bedeckt;
wobei der wabenförmige Körper (24) einen T-förmigen Querschnitt aufweist, bei dem ein stromaufwärts gelegener Abschnitt eine höhere radiale Ausdehnung aufweist als ein stromabwärts gelegener Abschnitt; wobei der Abschirmungskörper (30) entweder die gesamte Innenfläche (27) und die Außenfläche (28), die dem stromabwärts gelegenen Abschnitt des wabenförmigen Körpers (24) entsprechen, oder nur einen Teil der Innenfläche (27) und der Außenfläche (28), die dem stromabwärts gelegenen Abschnitt des wabenförmigen Körpers (24) entsprechen, bedeckt.

2. Gasturbine nach Anspruch 1, wobei die Abschnitte des Abschirmungskörpers (30), die die Innenfläche (27) und die Außenfläche (28) des wabenförmigen Körpers (24) bedecken, mit mehreren axialen Nuten (31) versehen sind.

3. Gasturbine nach einem der Ansprüche 1 oder 2, wobei der Abschirmungskörper (30) entlang der axialen Richtung mehr als die Hälfte der Innenfläche (27) und der Außenfläche (28) des wabenförmigen Körpers (24) bedeckt.

4. Gasturbine nach einem der Ansprüche 1 oder 2, wobei der Abschirmungskörper (30) entlang der axialen Richtung weniger als die Hälfte der Innenfläche (27) und der Außenfläche (28) des wabenförmigen Körpers (24) bedeckt.

5. Gasturbine nach einem der Ansprüche 1 oder 2, wobei der Abschirmungskörper (30) die Innenfläche (27) und die Außenfläche (28) des wabenförmigen Körpers (24) in unterschiedlichen axialen Ausmaßen bedeckt.

6. Gasturbine nach einem der Ansprüche 1 oder 2, wobei der Abschnitt des Abschirmungskörpers (30), der die Innenfläche (27) und/oder die Außenfläche (28) des wabenförmigen Körpers (24) bedeckt, in Bezug auf die axiale Richtung angewinkelt ist, wobei der Abschirmungskörper vorzugsweise radial elastisch leicht verformbar ist, um Montagetoleranzen der radialen Nuthöhe und eine Änderung der Nuthöhe während des Betriebs aufgrund einer ungleichmäßigen thermischen Verformung des Brennerendes zu kompensieren.

7. Gasturbine nach einem der vorangehenden Ansprüche, wobei jeder Rahmen (21) auch eine äußere Nut (42) umfasst, wobei wenigstens eine wabenförmige Dichtungsvorrichtung (20) auch in einer der äußeren Nuten (42) vorgesehen ist.

8. Gasturbine nach einem der vorangehenden Ansprüche, wobei mehrere Dosenbrenner vorgesehen sind und jeder Dosenbrenner (5) dazu konfiguriert ist, eine einzige Verbrennungsstufe auszuführen.

9. Gasturbine nach einem der vorangehenden Ansprüche 1 bis 7, wobei mehrere Dosenbrenner vorgesehen sind und jeder Dosenbrenner (5) dazu konfiguriert ist, zwei aufeinanderfolgende Verbrennungsstufen auszuführen.

10. Gasturbine nach einem der vorangehenden Ansprüche, wobei jeder Abschirmungskörper (30) aus einem metallischen Material, vorzugsweise einer Legierung, oder aus Keramik oder einem anderen geeigneten hitzebeständigen Material gefertigt ist, das dazu konfiguriert ist, den wabenförmigen Körper mechanisch zu schützen.

11. Gasturbine nach einem der vorangehenden Ansprüche, wobei die Verbindung zwischen dem Abschirmungskörper (30) und dem wabenförmigen Körper (24) eine Presspassungs-Verbindung ist.

## Revendications

1. Turbine à gaz pour centrale électrique; la turbine à gaz (1) comprenant :
- au moins une chambre de combustion, de préférence une pluralité de chambres de combustion tubulaires (5) ;
- une turbine (4) disposée en aval de la chambre de combustion (5) ;
dans laquelle
- la chambre de combustion comprend une extrémité aval (21), de préférence un cadre d'image pour chaque chambre de combustion tubulaire, faisant face à la turbine (4) et pourvue d'une rainure intérieure (41) ;
- la turbine (4) comprend une pluralité de premières aubes de stator (44) ; chaque première aube de stator (44) comprenant une plate-forme intérieure (43) pourvue d'une dent (45) faisant saillie en partie à l'intérieur de la rainure intérieure (41) ;
dans laquelle
plusieurs joints sont logés dans les rainures intérieures (41) de l'extrémité aval (21) de chambre de combustion et sont configurés pour coopérer avec les dents (45) d'aube afin d'assurer l'étanchéité de chaque interface entre la chambre de combustion tubulaire et la turbine ;
dans laquelle
au moins un joint est un dispositif d'étanchéité en nid d'abeilles (20), le dispositif d'étanchéité en nid d'abeilles (20) étant **caractérisé en ce que** le dispositif d'étanchéité en nid d'abeilles (20) est un ensemble comprenant un corps en nid d'abeilles (24) constitué d'une pluralité d'alvéoles radiales et un corps de bouclier (30) couvrant au moins la partie du corps en nid d'abeilles (24) coopérant avec la dent (45) d'aube,
dans laquelle chaque rainure (41) et le corps en nid d'abeilles (24) ont une étendue annulaire ; le corps en nid d'abeilles (24) comprend une face avant (26) dirigée vers la turbine (4), une face arrière opposée (29) tournée vers le fond de la rainure (41), une face intérieure (27) tournée vers la surface intérieure de la rainure (41) et une face extérieure (28) tournée vers la surface extérieure de la rainure (41) ; le corps de bouclier (30) couvrant la face avant (26) et une partie de la face intérieure (27) et de la face extérieure (28) du corps en nid d'abeilles (24) ;
dans laquelle le corps en nid d'abeilles (24) présente une section transversale en T dans laquelle une partie amont a une étendue radiale supérieure à une partie aval ; le corps de bouclier (30) couvrant soit la totalité de la face intérieure (27) et la face extérieure (28) correspondant à la partie aval du corps en nid d'abeilles (24), soit seulement une partie de la face intérieure (27) et la face extérieure (28) correspondant à la partie aval du corps en nid d'abeilles (24).

2. Turbine à gaz selon la revendication 1, dans laquelle les parties du corps de bouclier (30) couvrant la face intérieure (27) et la face extérieure (28) du corps en nid d'abeilles (24) sont pourvues d'une pluralité de rainures axiales (31).

3. Turbine à gaz selon l'une quelconque des revendications 1 ou 2, dans laquelle, le long de la direction axiale, le corps de bouclier (30) couvre plus de la moitié de la face intérieure (27) et de la face extérieure (28) du corps en nid d'abeilles (24).

4. Turbine à gaz selon l'une quelconque des revendications 1 ou 2, dans laquelle, le long de la direction axiale, le corps de bouclier (30) couvre moins de la moitié de la face intérieure (27) et de la face extérieure (28) du corps en nid d'abeilles (24).

5. Turbine à gaz selon l'une quelconque des revendications 1 ou 2, dans laquelle le corps de bouclier (30) couvre la face intérieure (27) et la face extérieure (28) du corps en nid d'abeilles (24) sur des étendues axiales différentes.

6. Turbine à gaz selon l'une quelconques des revendications 1 ou 2, dans laquelle la partie du corps de bouclier (30) couvrant la face intérieure (27) et/ou la face extérieure (28) du corps en nid d'abeilles (24) est inclinée par rapport à la direction axiale, le corps de bouclier étant de préférence légèrement déformable élastiquement dans le sens radial afin de compenser les tolérances d'assemblage de la hauteur radiale de la rainure et le changement de la hauteur de la rainure pendant le fonctionnement en raison de la déformation thermique non uniforme de l'extrémité de la chambre de combustion.

7. Turbine à gaz selon l'une quelconque des revendications précédentes, dans laquelle chaque cadre d'image (21) comprend également une rainure extérieure (42), au moins un dispositif d'étanchéité en nid d'abeilles (20) étant également prévu dans l'une desdites rainures extérieures (42).

8. Turbine à gaz selon l'une quelconque des revendications précédentes, dans laquelle une pluralité de chambres de combustion tubulaires sont prévues, chaque chambre de combustion tubulaire (5) étant configurée pour effectuer une seule étape de combustion.

9. Turbine à gaz selon l'une quelconque des revendications précédentes de 1 à 7, dans laquelle une pluralité de chambres de combustion tubulaires sont prévues, chaque chambre de combustion tubulaire (5) étant configurée pour effectuer deux étapes de combustion successives.

10. Turbine à gaz selon l'une quelconque des revendications précédentes, dans laquelle le corps de bouclier (30) est constitué d'un matériau métallique, de préférence un alliage, ou d'une céramique ou de tout autre matériau adapté résistant à la chaleur, configuré pour protéger mécaniquement le corps en nid d'abeilles.

11. Turbine à gaz selon l'une quelconque des revendications précédentes, dans laquelle le couplage entre le corps de bouclier (30) et le corps en nid d'abeilles (24) est un couplage à ajustement serré.
